(19) Europäisches Patentamt

European Patent Office

Office européen des brevets

(11) **EP 0 780 287 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(51) Int. Cl.⁶: **B62D 47/02**, B62D 59/04, B60T 8/00, B60T 8/32

(21) Anmeldenummer: **96118446.2**

(22) Anmeldetag: **18.11.1996**

(54) **Nicht spurgebundenes Gelenkfahrzeug**

Non-track bound articulated vehicle

Véhicule articulé non guidé

(84) Benannte Vertragsstaaten:
**BE DE FR IT SE**

(30) Priorität: **23.12.1995 DE 19548716**

(43) Veröffentlichungstag der Anmeldung:
**25.06.1997 Patentblatt 1997/26**

(73) Patentinhaber:
**DaimlerChrysler AG**
**70567 Stuttgart (DE)**

(72) Erfinder:
**Niemann, Klaus, Dr.-Ing.**
**73642 Welzheim (DE)**

(56) Entgegenhaltungen:
**EP-A- 0 575 936**          **DE-A- 4 324 211**
**US-A- 4 231 442**          **US-A- 4 610 325**

**Beschreibung**

Die Erfindung betrifft ein nicht spurgebundenes Gelenkfahrzeug, insbesondere einen Gelenkomnibus, mit angetriebenem Vorderwagen und angetriebenem Nachläufer sowie mit einem die Gelenkkraft erfassenden Geber und einer Antriebsregelung, welche zwischen den Antriebskräften von Vorderwagen und Nachläufer eine Differenz entsprechend einem vorgegebenen Wert der Gelenkkraft einstellt, um den Nachläufer ständig in gezogenem Zustand zu halten.

In der DE-C-44 31 698 wird ein entsprechender Gelenkomnibus mit Elektroantrieben für Vorderwagen und Nachläufer beschrieben. Die Antriebsregelung ist mit einem die Gelenkkräfte zwischen Vorderwagen und Nachläufer registrierendem Sensor verbunden, so daß die Antriebsregelung den jeweiligen Istzustand der Gelenkkräfte „kennt" und die Antriebe von Vorderwagen und Nachläufer so zu regeln vermag, daß die tatsächlich auftretenden Gelenkkräfte einem vorzugebenden, im wesentlichen konstanten Sollwert angeglichen werden.

In entsprechender Weise werden auch die Bremskräfte geregelt.

Auf diese Weise wird einerseits ein stabiles Fahrverhalten gewährleistet und ein Ausbrechen des Nachläufers weitestgehend verhindert, weil der Nachläufer ständig vom Vorderwagen gezogen und damit in seiner Richtung stabilisiert wird. Andererseits trägt der Antrieb des Nachläufers gleichwohl zum Vortrieb des Gelenkfahrzeuges bei, so daß das Fahrzeug auch auf rutschigem Untergrund sicher anfahren bzw. weiterfahren kann.

Ein besonderer Vorzug dieses Konzeptes für Gelenkfahrzeuge liegt darin, daß aufwendige Knickschutzvorrichtungen, die ein unerwünschtes Einknicken des Gelenkes zwischen Vorderwagen und Nachläufer verhindern sollen, erübrigt werden können, weil das Gelenk ständig in Streckrichtung belastet wird.

Aufgabe der Erfindung ist es nun, Gelenkfahrzeuge der Eingangs angegebenen Art in vorteilhafter Weise weiterzuentwickeln und insbesondere notwendige Meßwerterfassungen zu vereinfachen.

Diese Aufgabe wird erfindungsgemäß dadurch gelöst, daß der Nachläufer einen Signalgeber, welcher mit der Achslast des Nachläufers korrelierte Signale erzeugt, aufweist und diese Signale einen in Abhängigkeit von der Achslast bestimmten Sollwert für die Gelenkkraft - im Sinne einer zugkraft zwischen Vorderwagen und Nachläufer - vorgeben.

Die Erfindung beruht auf dem allgemeinen Gedanken, die Regelung der Gelenkkräfte zu vereinfachen, indem die Antriebskräfte des Nachläuferwagens und damit die Gelenkkraft belastungsabhängig geregelt werden. Diese Art der Regelung vermeidet störende Rückwirkungen zwischen den Gelenkkräften und den Antriebskräften. Darüber hinaus kann ein besonders stabiles Fahrverhalten gewährleistet werden. Denn es läßt sich ohne weiteres erreichen, daß die vom Nachläufer auf den Vorderwagen ausgeübte Zuglast mit zunehmender Beladung des Nachläufers ansteigt.

Im Ergebnis verhält sich das erfindungsgemäße Gelenkfahrzeug sehr ähnlich wie ein Gelenkfahrzeug mit antriebslosem Nachläufer.

Sollten in der Gelenkkraftregelung Störungen auftreten, braucht lediglich der Antrieb des Nachläufers abgeschaltet zu werden, um einen sicheren Zugbetrieb gewährleisten zu können. Gegebenenfalls kann die Antriebskraft des Nachläufers beim Notbetrieb auch auf einen vorgegebenen Anteil des Rollwiderstandes des Nachläufers begrenzt werden, solange die Signale für die Achslast des Nachläufers zur Verfügung stehen.

Des weiteren ist von Vorteil, daß der zur Erfassung der Achslast des Nachläufers vorgesehene Signalgeber in der Regel ohnehin vorhanden ist, weil er auch für andere Aufgabe benötigt wird, beispielsweise zur Regelung einer Luftfederung und/oder zur Registrierung des Besetzungsgrades eines Omnibusses.

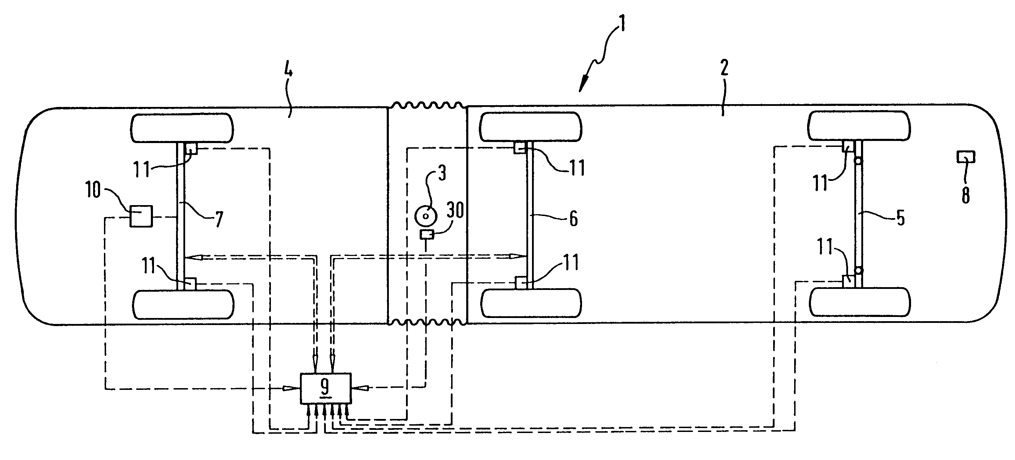

Im übrigen wird hinsichtlich bevorzugter Merkmale der Erfindung auf die Ansprüche sowie die nachfolgende Erläuterung der Zeichnung verwiesen, anhand der besonders vorteilhafte Ausführungsformen der Erfindung beschrieben werden.

Dabei zeigt die einzige Figur eine schematisierte Draufsicht auf einen erfindungsgemäßen Gelenkomnibus.

Der dargestellte Gelenkomnibus 1 besitzt einen Vorderwagen 2 sowie einen damit über ein Knickgelenk 3 verbundenen Nachläufer 4. Dem Kniegelenk 3 ist ein Gelenkkraftgeber 30 zugeordnet, dessen Signale die zwischen Vorderwagen 2 und Nachläufer 4 wirksamen Gelenkkräfte, insbesondere in Längsrichtung des Vorderwagens 2, wiedergeben. Der Vorderwagen 2 besitzt eine nicht angetriebene, vom Fahrer in üblicher Weise lenkbare Vorderachse 5 und eine angetriebene, unlenkbare Hinterachse 6. Der Nachläufer 4 ist an seinem vorderen Ende über das Knickgelenk 3 auf dem Vorderwagen 2 und im übrigen mittels einer angetriebenen Achse 7 abgestützt. Für die Antriebe der Achsen 6 und 7 können elektrische Radnabenmotoren vorgesehen sein, die über ein dieselgetriebenes Generatoraggregat (nicht dargestellt) oder mittels einer Oberleitung mit elektrischem Strom versorgt werden.

Der Antrieb der Hinterachse 6 des Vorderwagens 2 wird vom Fahrer mittels eines Fahrpedals 8 gesteuert.

Der Antrieb der Achse 7 des Nachläufers 4 wird von einer Regelung 9 in Abhängigkeit von einem Soll-Istwert-Vergleich zwischen einem Sollwert und dem vom Gelenkkraftgeber 30 ermittelten Istwert der Gelenkkraft gesteuert, wobei der Sollwert durch Signale eines der Achse 7 zugeordneten Achslastsensors 10 vorgegeben wird.

Hierbei ist gemäß einer bevorzugten Ausführungsform der Erfindung vorgesehen, daß die Antriebskräfte an der Achse 7 des Nachläufers 4 so zu steuern, daß sich in Zugrichtung eine Gelenkkraft einstellt, die größenordnungsmäßig etwa halb so groß wie der Rollwiderstand $W_4$ des Nachläufers 4 ist.

Für den Rollwiderstand $W_4$ des Nachläufers 4 gilt:

$$W_4 = L_4\, f_4,$$

wobei $L_4$ die Achslast und $f_4$ einen im wesentlichen durch Lagerreibung und Walkarbeit der Bereifung der Räder der Achse 7 bestimmten Rollwiderstandsbeiwert bezeichnen.

Für den Rollwiderstandsbeiwert kann ein typischer Erfahrungswert für gute Fahrbahnverhältnisse vorgegeben werden. Dieser Wert kann von der Regelung 9 aus einem ihr zugeordneten Speicher abgerufen werden.

Wenn nun die Achslast ständig ermittelt wird, können die Gelenkkräfte G am Knickgelenk 3 ständig wie folgt eingeregelt werden:

$$G = 0{,}5\, W_4 = 0{,}5\, L_4\, f_4.$$

Damit wird also die am Vorderwagen 2 „fühlbare" Zuglast des Nachläufers 4 auf etwa den halben Rollwiderstand des Nachläufers 4 eingestellt.

Grundsätzlich kann der Antrieb der Achse 7 auch so eingeregelt werden, daß die Gelenkkraft in Zugrichtung einem anderen Bruchteil des Rollwiderstandes des Nachläufers 4 entspricht.

Bei der Regelung des Antriebes der Achse 7 müssen die Gelenkkräfte am Knickgelenk 3 nicht konstant bleiben. Vielmehr können sich die Gelenkkräfte ähnlich wie bei einem Gelenkfahrzeug mit antriebslosem Nachläufer ändern.

Die Regelung 9 überprüft sich ständig auf richtige Funktion. Falls Anzeichen von Fehlfunktionen auftreten, wird der Antrieb der Achse 7 ausgeschaltet, so daß sich das Fahrzeug 1 wie ein normales Zuggelenkfahrzeug mit artriebslosem Nachläufer 4 verhält.

Außerdem kann die Regelung 9 beim Notbetrieb gegebenenfalls Drehzahlsignale von Radsensoren 11 auswerten, die den Rädern der Achsen 5, 6 und 7 zugeordnet sind. Falls bspw. auf rutschigem Untergrund übermäßig große Drehzahldifferenzen zwischen den Rädern der Vorderachse 5 und der Hinterachse 6 auftreten, kann die Regelung 9 einerseits die Antriebsleistung des Antriebes der Hinterachse 6 kurzzeitig vermindern und andererseits die Antriebsleistung des Antriebes der Achse 7 kurzzeitig erhöhen um insgesamt einen angenäherten Gleichlauf der Räder der angetriebenen Achsen 6 und 7 mit den Rädern der nicht angetriebenen Achse 5 zu erzeugen. Um auch bei solchen Fahrsituationen am Knickgelenk 3 nach Möglichkeit Zugkräfte zwischen Vorderwagen 2 und Nachläufer 4 zu erzeugen, kann der Antrieb der Achse 7 so geregelt werden, daß die Drehzahlen der Räder dieser Achse 7 etwas geringer bleiben als die Drehzahlen der Räder der Achse 6. Gleichwohl läßt sich damit ein Ausbrechen des Nachläufers 4 nicht in gleicher Weise wie beim Normalbetrieb vermeiden.

Schließlich kann beim Notbetrieb auch vorgesehen sein, die Antriebsleistung des Nachläufers 4 auf einen vorgegebenen bzw. vorgebbaren Anteil des Rollwiderstandes des Nachläufers zu begrenzen, so daß der Nachläufer 4 auch beim Notbetrieb noch zum Vortrieb des Gelenkfahrzeuges beitragen kann. Beim Bremsen des Fahrzeuges werden die Bremsen von Vorderwagen 2 und Nachläufer 4 - zumindest in der Anfangsphase des Bremsmanövers - automatisch so angesteuert, daß sich der gewünschte Sollwert der Gelenkkraft einstellt. Die Signale des Reglers 30 werden deshalb auch einer nicht näher dargestellten Bremsregelung zugeführt.

## Patentansprüche

1. Nicht spurgebundenes Gelenkfahrzeug, insbesondere Gelenkomnibus, mit angetriebenem Vorderwagen und angetriebenem Nachläufer sowie mit einem die Gelenkkraft erfassenden Geber und einer Antriebsregelung, welche zwischen den Antriebskräften von Vorderwagen und Nachläufer eine Differenz entsprechend einem vorgegebenen Wert der Gelenkkraft einstellt, um den Nachläufer ständig in gezogenem Zustand zu halten, **dadurch gekennzeichnet,** daß der Nachläufer (4) einen Signalgeber (10), der mit der Achslast des Nachläufers korrelierte Signale erzeugt, aufweist und diese Signale einen in Abhängigkeit von der Achslast bestimmten Sollwert für die Gelenkkraft vorgeben.

2. Gelenkfahrzeug nach Anspruch 1, **dadurch gekennzeichnet**, daß der Sollwert betragsmäßig etwa dem halben Rollwiderstand auf guter Fahrbahn entspricht.

3. Gelenkfahrzeug nach Anspruch 1 oder 1, **dadurch gekennzeichnet,** daß die Regelung (9) bzw. eine Zusatzregelung auch Drehzahlsignale von Radsensoren (11), die den Fahrzeugrädern zugeordnet sind, auswertet und bei vorgegebenen bzw. vorgebbaren Fahrzuständen in die Steuerung aller Fahrzeugantriebe eingreift, um einen angenäherten Gleichlauf von Antriebsrädern herzustellen.

4. Gelenkfahrzeug nach einem der Ansprüche 1 bis 3, **dadurch gekennzeichnet,** daß sich die Regelung (9) ständig auf fehlerfreie Funktion überprüft und bei Auftreten eines Fehlers den Antrieb des Nachläufers (4) abschaltet oder die Antriebsleistung auf einen vorgebbaren bzw. vorgegebenen Anteil des Rollwiderstandes des Nachläufers (4) begrenzt.

5. Gelenkfahrzeug nach einem der Ansprüche 1 bis 3, **dadurch gekennzeichnet,** daß in einem Normalfall die Antriebsleistung des Nachläufers (4) vom Fahrer, z.B. durch Betätigung eines Fahrpedals, gesteuert und die Antriebsleistung des Vorderwagens (2) automatisch entsprechend dem Soll-Istwert-Vergleich der Gelenkkraft geregelt wird.

6. Gelenkfahrzeug nach einem der Ansprüche 1 bis 5, **dadurch gekennzeichnet,** daß oberhalb eines Schwellwertes der Antriebsleistung der Antrieb des Vorderwagens (2) fahrerseitig gesteuert und der Antrieb des Nachläufers (4) entsprechend dem Sollwert der Gelenkkraft automatisch eingeregelt wird.

7. Gelenkfahrzeug nach einem der Ansprüche 1 bis 6, **dadurch gekennzeichnet,** daß der Gelenkkraftgeber im wesentlichen nur die Gelenkkräfte in Längsrichtung des Vorderwagens (2) erfaßt.

**Claims**

1. A non-track-bound articulated vehicle, in particular an articulated bus, with a driven front car and driven trailer as well as a transmitter detecting the articulation power and a transmission control, which adjusts a difference between the drive powers of front car and trailer corresponding to a predetermined value of the articulation power in order to keep the trailer constantly in a pulled state, **characterised in that** the trailer (4) has a signal transmitter (10), which produces signals correlated with the axle-load of the trailer and these signals predetermine a specific desired value for the articulation power dependent on the axle load.

2. An articulated vehicle as claimed in claim 1, **characterised in that** the desired value corresponds in terms of amount to approximately half the rolling resistance on a good roadway.

3. An articulated vehicle as claimed in claim 1 or 2, **characterised in that** the control (9) or an additional control also evaluates speed signals from wheel sensors (11) assigned to the vehicle wheels and when the vehicle is in predetermined or predeterminable states includes all vehicle drives in the control system in order to produce an approximate synchronisation of driving wheels.

4. An articulated vehicle as claimed in one of claims 1 to 3,

**characterised in that** the control (9) constantly checks for error-free operation and if an error does occur switches off the drive of the trailer (4) or limits the driving power to a predeterminable or predetermined proportion of the rolling resistance of the trailer (4).

5. An articulated vehicle as claimed in one of claims 1 to 3, **characterised in that** in a normal situation, the driving power of the trailer (4) is controlled by the driver, e.g. by operating an accelerator pedal, and the driving power of the front car (2) is automatically controlled in accordance with the comparison of the actual-desired values of the articulation power.

6. An articulated vehicle as claimed in one of claims 1 to 5, **characterised in that** above a threshold value of the driving power, the drive of the front car (2) is controlled by the driver and the drive of the trailer (4) is automatically adjusted in accordance with the desired value of the articulation power.

7. An articulated vehicle as claimed in one of claims 1 to 6, **characterised in that** the articulation power transmitter essentially detects the articulation power values in a longitudinal direction of the front car (2) only.

**Revendications**

1. Véhicule articulé non guidé, en particulier autobus articulé, comprenant un véhicule avant mû et une remorque mue, ainsi qu'un transmetteur détectant la force transmise par l'articulation et une régulation motrice qui établit, entre les forces motrices du véhicule avant et de la remorque, une différence correspondant à une valeur préfixée de la force transmise par l'articulation afin de maintenir la remorque en permanence a l'état tiré, caractérisé en ce que la remorque (4) présente un transmetteur de signaux (10) qui génère des signaux corrélés à la charge d'essieu de la remorque et ces signaux préfixent une valeur de consigne, déterminée en fonction de la charge d'essieu, pour la force transmise par l'articulation.

2. Véhicule articulé selon la revendication 1, caractérisé en ce que la valeur de consigne correspond, quantitativement, environ à la moitié de la résistance au roulement sur une chaussée en bon état.

3. Véhicule articulé selon la revendication 1 ou 2, caractérisé en ce que la régulation (9) ou une régulation supplémentaire exploite également des signaux de vitesse de rotation fournis par des capteurs de roues (11) coordonnés aux roues du véhicule articulé et intervient, dans des situations de roulement préfixées ou pouvant être préfixées, dans la commande de tous les systèmes moteurs du véhicule articulé afin d'établir un synchronisme approximatif des roues motrices.

4. Véhicule articulé selon une des revendications 1 à 3, caractérisé en ce que la régulation (9) contrôle sans cesse son fonctionnement sans défauts et, en cas d'apparition d'un défaut, arrête le système moteur de la remorque (4) ou limite sa puissance motrice à une fraction préfixée ou ou pouvant être préfixée de la résistance au roulement de la remorque (4).

5. Véhicule articulé selon une des revendications 1 à 3, caractérisé en ce que, dans un cas normal, la puissance motrice de la remorque (4) est commandée par le conducteur, par exemple par l'actionnement d'une pédale d'accélérateur, et la puissance motrice du véhicule avant (2) est régulée automatiquement en fonction du résultat de la comparaison entre la valeur de consigne et la valeur réelle de la force transmise par l'articulation.

6. Véhicule articulé selon une des revendications 1 à 5, caractérisé en ce que, au-dessus d'une valeur de seuil de la puissance motrice, le système moteur du véhicule avant (2) est commandé par le conducteur et le système moteur de la remorque (4) est régulé automatiquement suivant la valeur de consigne de la force transmise par l'articulation.

7. Véhicule articulé selon une des revendications 1 à 6, caractérisé en ce que le transmetteur de la force transmise par l'articulation détecte seulement, pour l'essentiel, les forces transmises par l'articulation dans la direction longitudinale du véhicule avant (2).